# EUROPEAN PATENT APPLICATION

(11) **EP 2 960 022 A1**
(43) Date of publication of application: **30.12.2015**
(21) Application number: 15162723.9
(22) Date of filing: 08.04.2015
(51) Int. Cl.: B25J 9/16

(54) **ROBOT CONTROL SYSTEM, INFORMATION COMMUNICATION MODULE, ROBOT CONTROLLER, COMPUTER PROGRAM, AND ROBOT CONTROL METHOD**

(30) Priority: 15.04.2014 JP 2014084045
(71) Applicant: Kabushiki Kaisha Yaskawa Denki, Kitakyushu-shi, Fukuoka 806-0004 (JP)
(72) Inventor: Ito, Toshiki, Kitakyushu-shi, Fukuoka 806-0004 (JP); Irie, Toshimitsu, Kitakyushu-shi, Fukuoka 806-0004 (JP)
(74) Representative: Viering, Jentschura & Partner mbB Patent- und Rechtsanwälte

(57) **Abstract**

A robot control system (100) includes a robot controller (2) connected to a robot (1), a workpiece position and posture recognizing device (3) recognizing a workpiece position and posture, and an information communication module (4) communicating with the robot controller and the workpiece position and posture recognizing device. The information communication module includes a workpiece position and posture request sending section (40) sending a workpiece position and posture request regarding a single workpiece to the workpiece position and posture recognizing device in accordance with a workpiece recognition command from the robot controller, which command contains information regarding a number of workpieces to be recognized, and a workpiece recognition result sending section (41) sending a workpiece recognition result, which contains information regarding a number of recognized workpieces, to the robot controller in accordance with one or more data of workpiece positions and postures from the workpiece position and posture recognizing device.

## Description

### BACKGROUND OF THE INVENTION

### 1. Field of the Invention

The present disclosure relates to a robot control system, an information communication module, a robot controller, a computer program, and a robot control method.

### 2. Description of the Related Art

Japanese Unexamined Patent Application Publication No. 2000-288974 discloses a robot apparatus that detects a position and a posture of each of targets (workpieces), having the same shape and piled in a large number, from image data of those targets, and that determines a working direction of a robot or a working direction and a working position of the robot. In the robot apparatus disclosed in Japanese Unexamined Patent Application Publication No. 2000-288974, a robot controller 10 and an image processor 30 are connected to each other via a communication interface.

### SUMMARY OF THE INVENTION

An object of the present disclosure is to absorb differences in communication protocols between a robot controller and a workpiece position and posture recognizing device and to facilitate connection therebetween, thereby increasing a degree of freedom in selection of the robot controller and the workpiece position and posture recognizing device depending on specifics of work.

According to one aspect of the present disclosure, a robot control system includes a robot controller connected to a robot, a workpiece position and posture recognizing device that recognizes a position and a posture of a workpiece, and an information communication module that communicates with the robot controller and the workpiece position and posture recognizing device, the information communication module including a workpiece position and posture request sending section that sends a workpiece position and posture request regarding a single workpiece to the workpiece position and posture recognizing device in accordance with a workpiece recognition command from the robot controller, which command contains information regarding a number of workpieces to be recognized, and a workpiece recognition result sending section that sends a workpiece recognition result, which contains information regarding a number of workpieces having been recognized, to the robot controller in accordance with one or more data of workpiece positions and postures from the workpiece position and posture recognizing device.

In the robot control system according to the one aspect of the present disclosure, the workpiece recognition command may contain a first workpiece recognition command and a second workpiece recognition command, the workpiece position and posture request may contain a first candidate request that requests the workpiece position and posture as a first candidate, and a next candidate request that requests the workpiece position and posture as a next candidate, and the workpiece position and posture request sending section may send the one first candidate request or both the one first candidate request and the one or more next candidate requests in accordance with the first workpiece recognition command, and sends the one or more next candidate requests in accordance with the second workpiece recognition command.

In the robot control system according to the one aspect of the present disclosure, the workpiece recognition command may contain workpiece identification information, and the information communication module may further include a workpiece identification information storing section that stores the workpiece identification information corresponding to workpiece information, which has been read into the workpiece position and posture recognizing device, and a workpiece information read instructing section that, when the workpiece identification information contained in the workpiece recognition command is not stored in the workpiece identification information storing section, instructs the workpiece position and posture recognizing device to read the workpiece information corresponding to the relevant workpiece identification information.

In the robot control system according to the one aspect of the present disclosure, the information communication module may further include a workpiece information release instructing section that, when the read of the workpiece information by the workpiece position and posture recognizing device has failed, instructs release of at least part of the workpiece information having been read into the workpiece position and posture recognizing device.

In the robot control system according to the one aspect of the present disclosure, the workpiece information release instructing section may instruct the release of the workpiece information in accordance with a preset priority order or a frequency of the workpiece recognition command per workpiece.

According to another aspect of the present disclosure, the information communication module used in any one of the robot control systems described above is provided.

According to still another aspect of the present disclosure, a computer program causing a computer to function as the above-described information communication module is provided.

According to still another aspect of the present disclosure, the robot controller used in any one of the robot control systems described above is provided.

According to still another aspect of the present disclosure, a robot control method includes sending a workpiece position and posture request regarding a single workpiece in accordance with a workpiece recognition command that contains information regarding a number of workpieces to be recognized, recognizing the workpiece position and posture in accordance with the workpiece position and posture request, sending a workpiece recognition result, which contains information regarding a number of workpieces having been recognized, in accordance with one or more data of the workpiece positions and postures, and controlling a robot in accordance with the workpiece recognition result.

In the robot control method according to the still other aspect of the present disclosure, the workpiece recognition command may contain a first workpiece recognition command and a second workpiece recognition command, the workpiece position and posture request may contain a first candidate request that requests the workpiece position and posture as a first candidate, and a next candidate request that requests the workpiece position and posture as a next candidate, and the method may further include sending the one first candidate request or both the one first candidate request and the one or more next candidate requests in accordance with the first workpiece recognition command, and sending the one or more next candidate requests in accordance with the second workpiece recognition command.

In the robot control method according to the still other aspect of the present disclosure, the workpiece recognition command may contain workpiece identification information, and the method may further include reading workpiece information corresponding to the workpiece identification information that is contained in the workpiece recognition command, storing the workpiece identification information corresponding to the workpiece information that has been read, and when the workpiece identification information contained in the workpiece recognition command is not stored, instructing read of the workpiece information corresponding to the relevant workpiece identification information.

In the robot control method according to the still other aspect of the present disclosure, the method may include instructing release of at least part of the workpiece information having been read, when the read of the workpiece information has failed.

In the robot control method according to the still other aspect of the present disclosure, the method may include instructing the release of the workpiece information in accordance with a preset priority order or a frequency of the workpiece recognition command per workpiece.

### BRIEF DESCRIPTION OF THE DRAWINGS

Fig. 1 is a schematic view of a robot control system according to one embodiment of the present disclosure.
Fig. 2 is a block diagram of hardware of a computer providing a hardware body in which an information communication module and a workpiece position and posture recognizing device are incorporated together.
Fig. 3 is a functional block diagram of the robot control system.
Fig. 4 is a work flowchart of the robot control system.
Fig. 5 is a work flowchart of the robot control system.
Fig. 6 is a work flowchart of the robot control system.
Fig. 7 is a flowchart of a robot control method executed by the robot control system according to one embodiment of the present disclosure.

### DESCRIPTION OF THE EMBODIMENTS

A robot control system 100 according to one embodiment of the present disclosure will be described below with reference to the drawings.

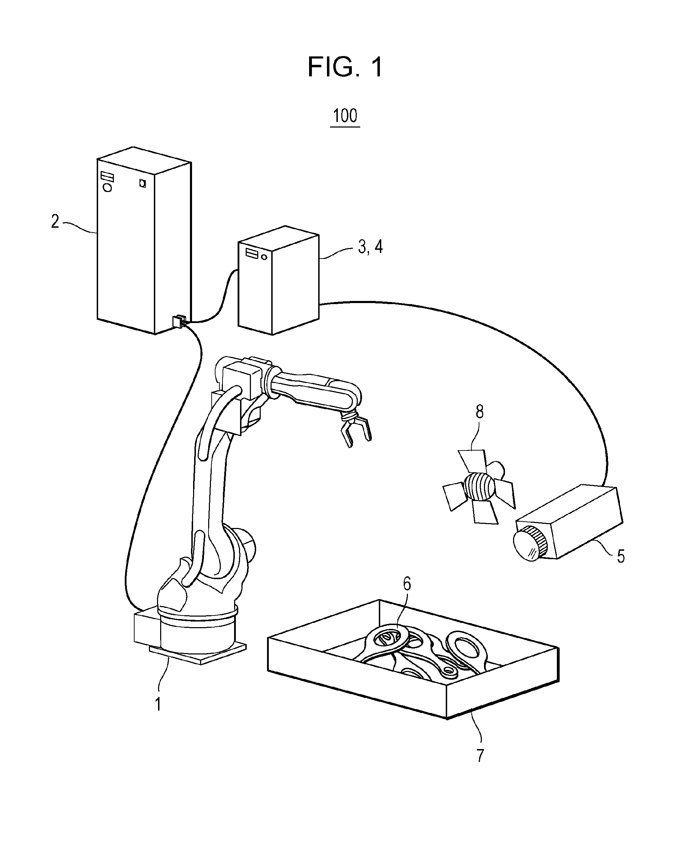

Fig. 1 is a schematic view of the robot control system 100 according to one embodiment of the present disclosure. The robot control system 100 includes a robot 1, a robot controller 2 connected to the robot 1, a workpiece position and posture recognizing device 3, and an information communication module 4.

The robot 1 used here is an articulated robot that is also called a manipulator. The robot controller 2 controls and drives the robot 1 in accordance with a predetermined program solely or in cooperation with an upper-level controller connected to the robot controller 2.

The workpiece position and posture recognizing device 3 and the information communication module 4 are incorporated in one hardware body in this embodiment. Here, the hardware body incorporating the workpiece position and posture recognizing device 3 and the information communication module 4 is provided by a general-purpose computer. The general-purpose computer functions as the workpiece position and posture recognizing device 3 and the information communication module 4 with running of software on the computer. A computer program causing the computer to function as the workpiece position and posture recognizing device 3, and a computer program causing the computer to function as the information communication module 4 are separate program modules and are operated to run on the computer independently of each other.

The workpiece position and posture recognizing device 3 is an image processor that is connected to a camera 5, and that recognizes a position and a posture of a workpiece 6 (hereinafter referred to as a "workpiece position and posture") based on image data captured by the camera 5. The camera 5 captures an image of a pallet 7 on which many workpieces 6 are piled. Here, the workpiece position and posture are information including at least coordinates and orientation of the workpiece 6 as a target. In this embodiment, the workpiece position and posture recognizing device 3 detects a three-dimensional shape of the workpiece 6 by employing a three-dimensional scanner of the so-called structured light type in which many slit lights are projected to the workpieces 6 on the pallet 7 by a slit light projector 8 and the slight lights are captured by the camera 5. As a matter of course, a method for detecting the three-dimensional shape is not limited to the structured light method, and another suitable method, such as stereoscopic image capturing method, can also be used. From the obtained three-dimensional shape, the workpiece position and posture recognizing device 3 recognizes the position and posture of the workpiece 6 through appropriate information processing. As illustrated, the many workpieces 6 are piled on the pallet 7. Therefore, when many data of workpiece positions and postures are obtained, the workpiece position and posture recognizing device 3 outputs the workpiece positions and postures in a preset priority order, e.g., in an order starting from the position and posture of the workpiece at the top of a pile, or an order of easiness in grasping the workpiece by the robot 1 as described later.

The information communication module 4 is interposed between the robot controller 2 and the workpiece position and posture recognizing device 3, and it has roles of absorbing differences in communication protocols therebetween, causing the workpiece position and posture recognizing device 3 to recognize the workpiece position and posture in accordance with a request from the robot controller 2, and transmitting the obtained workpiece position and posture to the robot controller 2. In this embodiment, with the presence of the information communication module 4, there is no necessity of changing the specifications of one of the robot controller 2 and the workpiece position and posture recognizing device 3 in conformity with the communication protocols of the other. Furthermore, when the specifications of one of the robot controller 2 and the workpiece position and posture recognizing device 3 are changed, communication feasibility between both the parties is ensured just by changing the specifications of the information communication module 4 without changing the protocols of the other. Accordingly, this embodiment can facilitate connection between the robot controller 2 and the workpiece position and posture recognizing device 3, and can increase a degree of freedom in selection of the robot controller 2 and the workpiece position and posture recognizing device 3 depending on specifics of work.

The robot control system 100 according to this embodiment operates in such a way that the workpiece position and posture recognizing device 3 recognizes the workpiece position and posture of each of the workpieces 6, which are randomly piled on the pallet 7 without being arrayed in order, and that the robot 1 performs appropriate work on the workpiece 6. In this embodiment, the robot 1 grasps the workpieces 6 individually and transfers the grasped workpiece 6 to a downstream step, for example.

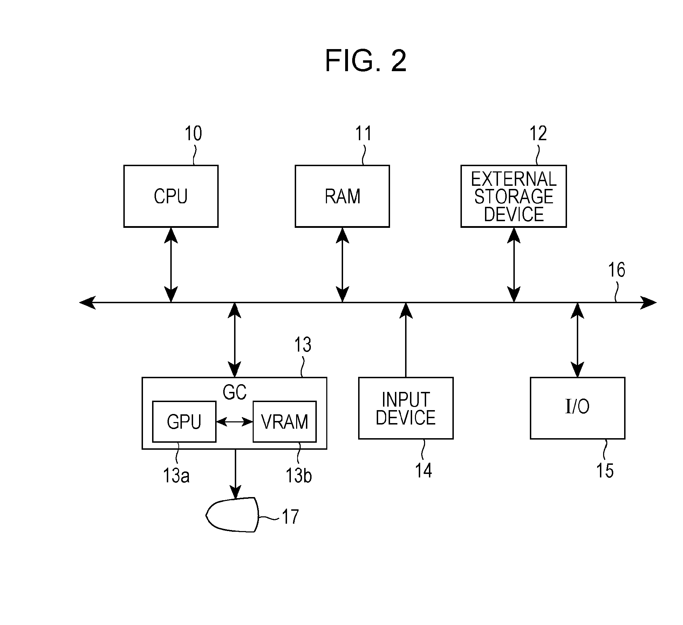

Fig. 2 is a block diagram of hardware of a computer providing a hardware body in which the workpiece position and posture recognizing device 3 and the information communication module 4 are incorporated. The computer used here may be a general computer. This embodiment employs a general computer including a CPU (Central Processing Unit) 10, a RAM (Random Access Memory) 11, an external storage device 12, a GC (Graphic Controller) 13, an input device 14, and an I/O (Input/Output) 15, which are interconnected through a data bus 16 such that electric signals can be transferred among them. The external storage device 12 is a device capable of statically recording information, such as a HDD (Hard Disk Drive) or an SSD (Solid State Drive). A signal from the GC 13 is output to a monitor 17 on which a user can visually recognize an image, such as a CRT (Cathode Ray Tube) or the so-called flat panel display, and is displayed as an image on the monitor 17. The input device 14 is a device through which the user inputs information, such as a keyboard, a mouse, or a touch panel. The I/O 15 is an interface through which the computer transfers information with respect to an external device. The GC 13 includes a GPU (Graphics Processing Unit) 13a and a VRAM (Video RAM) 13b. The GPU 13a is a processor particularly adapted for image processing, and it has a parallel arithmetic processing capability higher than that of a general processor, e.g., the CPU 10. The VRAM 13b is featured in that, when the VRAM 13b is accessed from the GPU 13a, data can be read and written at a higher speed than in the case of accessing the RAM 11 because there is no necessity of passing through the data bus 16 in the former case.

The computer programs causing the computer to function as the workpiece position and posture recognizing device 3 and the information communication module 4 are installed in the external storage device 12 and are read out into the RAM 11 to be executed by the CPU 10 as appropriate. In particular, the computer program causing the computer to function as the workpiece position and posture recognizing device 3 is coded such that processing related to image recognition is executed by the GPU 13a. Those computer programs may be optionally provided in a state recorded on a computer-readable information recording medium, e.g., an optical disk, a magneto-optical disk, or a flash memory, or provided via an information communication line, e.g., the Internet.

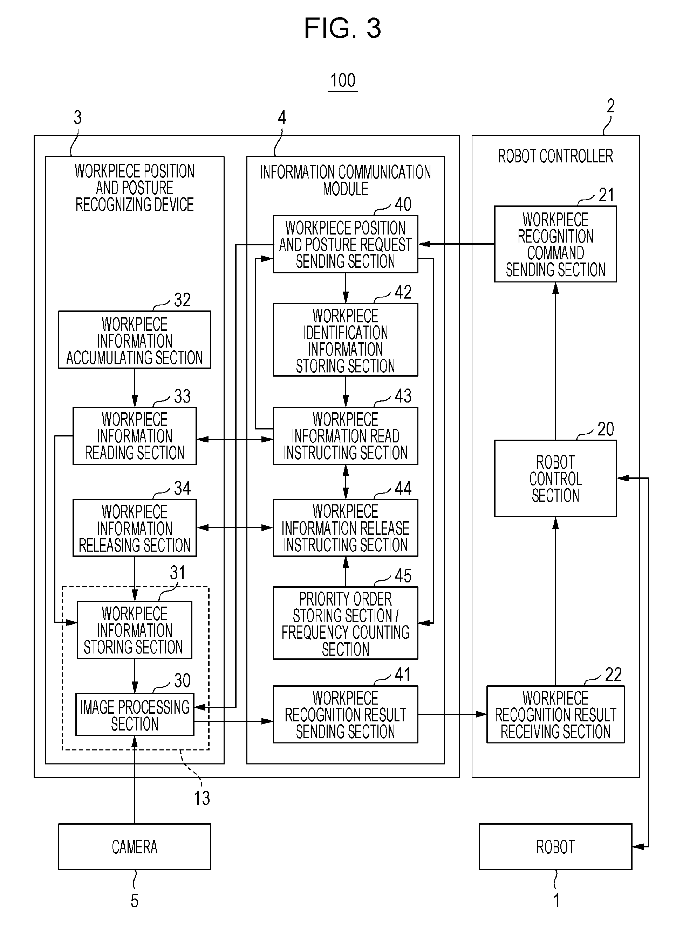

Fig. 3 is a functional block diagram of the robot control system 100.

The robot controller 2 performs information communication with respect to the robot 1. The robot controller 2 includes a robot control section 20 that controls operation of the robot 1 in accordance with the predetermined program or instructions from a controller at an even upper level, a workpiece recognition command sending section 21 that sends a workpiece recognition command to the information communication module 4, and a workpiece recognition result receiving section 22 that receives a workpiece recognition result from the information communication module 4. The robot control section 20, the workpiece recognition command sending section 21, and the workpiece recognition result receiving section 22 are implemented by software operated to run on a digital processor that is incorporated in the robot controller 2, and by an interface provided in the robot controller 2.

Here, the term "workpiece recognition command" implies information sent from the robot controller 2 to the information communication module 4, and represents a command for recognizing the types and the number of the workpieces 6 used in the operation of the robot 1 and for requesting the workpiece position and posture per workpiece. Therefore, the workpiece recognition command contains at least information related to the number of the workpieces 6. The term "workpiece recognition result" implies information received by the robot controller 2 from the information communication module 4, and includes the workpiece position and posture of the recognized workpiece 6. One workpiece recognition result may contain plural data of the workpiece positions and postures. Therefore, the workpiece recognition result contains at least information related to the number of the workpieces 6.

The workpiece position and posture recognizing device 3 includes an image processing section 30 that recognizes the requested workpiece 6 by executing appropriate information processing on image information obtained with the camera 5, and that detects the workpiece position and posture of the requested workpiece 6, and a workpiece information storing section 31 that stores workpiece information, i.e., information related to the workpiece 6 and used in the image processing executed by the image processing section 30. Here, the term "workpiece information" implies information that is employed to identify the presence, the position, and the posture of the workpiece 6 in the image captured by the camera 5. The workpiece information is made up of, for example, information of a three-dimensional shape of the workpiece 6 per type, reference coordinates, and a reference direction vector. An example of the processing executed by the image processing section 30 is to check matching between a three-dimensional shape obtained from the image information and a three-dimensional shape of the demanded workpiece 6, and to output, when the presence of the workpiece 6 is determined, a position in the reference coordinates and a direction of the reference vector of the relevant workpiece 6 in accordance with a coordinate system set on the pallet 7 (or a coordinate system set on the robot 1). The position in the reference coordinates and the direction of the reference vector of the workpiece 6, which are obtained with the above-mentioned processing, are one example of the term "workpiece position and posture" used in this Description.

In this embodiment, the image processing section 30 and the workpiece information storing section 31 are implemented by the GC 13 (see Fig. 2). More specifically, the image processing section 30 is practiced with the predetermined software operated to run on the GPU 13a, and the workpiece information storing section 31 is practiced with operation of storing the necessary workpiece information in the VRAM 13b. The reason is that, because the GPU 13a is suitable for image processing and information is sent and received between the GPU 13a and the VRAM 13b at a higher speed as described above, the workpiece position and posture can be detected at a high speed by executing, on the GC 13, both the processing in the image processing section 30 and holding of information used in that processing. Alternatively, the processing in the image processing section 30 may be executed in the CPU 10, and the workpiece information may be stored in the RAM 11. Anyway, the workpiece information storing section 31 is practiced by storing the workpiece information in a medium that allows high-speed access to the workpiece information held therein, such as a temporary storage represented by a DRAM.

A workpiece information accumulating section 32 is a section where the workpiece information possibly used later is accumulated in advance. The workpiece information accumulating section 32 is practiced by storing various kinds of workpiece information in the external storage device 12. The workpiece information accumulated in the workpiece information accumulating section 32 is read by a workpiece information reading section 33 from the workpiece information accumulating section 32 in accordance with a workpiece information reading command from the information communication module 4, and is written and stored into the workpiece information storing section 31 (such operation is called "read of the workpiece information"). The workpiece information stored in the workpiece information storing section 31 is released from the workpiece information storing section 31 by a workpiece information releasing section 34 in accordance with a workpiece information release command from the information communication module 4 (such operation is called "release of the workpiece information"). Here, the term "release of the workpiece information" implies processing to release assignment of a storage area, which has been assigned to the relevant workpiece information, and to set the storage area into a state capable of storing other information. The released workpiece information is lost from the workpiece information storing section 31.

Thus, the necessary workpiece information is stored in the workpiece information storing section 31 as appropriate, and the unnecessary workpiece information is released from the workpiece information storing section 31. The reason is that there is a limit in storage capacity of the workpiece information storing section 31, and that it is not feasible in some cases to previously accumulate all the workpiece information possibly used later.

The information communication module 4 includes a workpiece position and posture request sending section 40 that sends a workpiece position and posture request to the workpiece position and posture recognizing device 3 in accordance with the workpiece recognition command from the robot controller 2, and a workpiece recognition result sending section 41 that sends a workpiece recognition result to the robot controller 2 in accordance with the workpiece position and posture from the workpiece position and posture recognizing device 3.

Here, the workpiece recognition command received from the robot controller 2 and the workpiece position and posture request sent to the workpiece position and posture recognizing device 3 are sometimes not matched with each other in format. The workpiece recognition command contains information related to the number of the workpieces 6 to be recognized, while the workpiece position and posture request requests the workpiece position and posture for a single workpiece. In some cases, therefore, the workpiece position and posture request sending section 40 sends one workpiece recognition command to the workpiece position and posture recognizing device 3 after converting the command into a plurality of workpiece position and posture requests. Similarly, the workpiece position and posture received from the workpiece position and posture recognizing device 3 and the workpiece recognition result sent to the robot controller 2 are sometimes not matched with each other in format. The workpiece position and posture is related to one workpiece, while the workpiece recognition result may contain plural data of workpiece positions and postures and hence it contains information regarding the number of the workpieces 6 having been recognized. In some cases, therefore, the workpiece recognition result sending section 41 sends plural data of workpiece positions and postures to the robot controller 2 after converting them into one workpiece recognition result. In such a manner, the information communication module 4 absorbs differences in communication protocols between the robot controller 2 and the workpiece position and posture recognizing device 3.

The type of the workpiece 6 to be recognized in the robot control system 100 is not necessarily to be one. It is assumed that two or more types of the workpieces 6 are piled on one pallet 7, or that the type of the workpiece 6 is different per pallet 7 or per lot. In this embodiment, therefore, the workpiece recognition command sent from the robot controller 2 contains workpiece identification information. The workpiece identification information is information that is arbitrarily set to identify the type of the workpiece 6, and that may be, for example, a number assigned per type of the workpiece 6, or a name designating the specific type of the workpiece 6.

The information communication module 4 further includes a workpiece identification information storing section 42 that stores the workpiece identification information contained in the workpiece recognition request, which has been received from the robot controller 2. Thus, the workpiece identification information storing section 42 stores the workpiece identification information regarding the types of the workpieces 6 used in the past. When the workpiece identification information contained in the newly-received workpiece recognition command is not stored in the workpiece identification information storing section 42, a workpiece information read instructing section 43 sends a workpiece information read instruction to the workpiece position and posture recognizing device 3. The workpiece information read instructing section 43 receives, from the workpiece information reading section 33, a notice indicating that read of the workpiece information has succeeded, and permits sending of the workpiece position and posture request from the workpiece position and posture request sending section 40.

As described above, the information communication module 4 operates, with respect to the workpiece 6 for which the workpiece information has already been read, to send just the workpiece position and posture request, and with respect to the workpiece 6 for which the workpiece information has not yet been read, to send the workpiece information read instruction prior to sending the workpiece position and posture request for the first time, thereby causing the workpiece information to be read. Accordingly, the workpiece position and posture recognizing device 3 can read the necessary workpiece information as appropriate, while wasteful duplicate read of the workpiece information having been already read is avoided.

However, as mentioned above, there is an upper limit in the storage capacity of the workpiece information storing section 31, and the workpiece information is not read and stored infinitely beyond the limit. In other words, if, as a result of reading the workpiece information, the remaining capacity of the workpiece information storing section 31 becomes smaller than the capacity used to read further workpiece information, new workpiece information is not read any more. In such a case, a workpiece information release instructing section 44 sends, to the workpiece position and posture recognizing device 3, a workpiece information release instruction that instructs release of the workpiece information having been read.

More specifically, when the workpiece information read instructing section 43 receives, from the workpiece information reading section 33, a notice indicating a failure of the read of the workpiece information, the workpiece information read instructing section 43 commands the workpiece information release instructing section 44 to release the workpiece information. Upon receiving the command, the workpiece information release instructing section 44 determines which part of the workpiece information having been read is to be released, and sends the workpiece information release instruction to release the determined workpiece information. At that time, which part of the workpiece information having been read is to be released is determined optionally. Here, the workpiece information to be released is determined depending on a preset priority order, or frequency of the workpiece recognition command per type of the workpiece 6. The preset priority order is set, for example, by a user in consideration of importance per type of the workpiece 6. The frequency is obtained by checking the number of times at which the workpiece recognition command has been received from the robot controller 2 per type of the workpiece 6, or by counting the number of the workpieces 6 which have been requested to be recognized. The smaller the number of times or the counted number (i.e., the lower the frequency), the lower is the priority order. The workpiece information to be released is determined successively starting from the workpiece information having the lowest frequency. The preset priority order or the frequency of the workpiece recognition command per type of the workpiece 6 is stored in or counted by a priority order storing section / frequency counting section 45 to be referred by the workpiece information release instructing section 44 as appropriate.

With the configuration described above, the workpiece positions and postures can be detected for multiple types of the workpieces 6 without preparing the workpiece information storing section 31 with a very large capacity. Moreover, since the priority order in releasing the workpiece information is preset, or since the workpiece information to be released is determined in accordance with the frequency of the workpiece recognition command per type of the workpiece 6, the workpiece information having higher frequency in use is held without being released, and reduction of processing efficiency caused by frequent read of the workpiece information is avoided.

In this embodiment, the workpiece position and posture recognizing device 3 and the information communication module 4 are implemented by operating respective software modules independently of each other to run on a general-purpose computer that provides one hardware body. However, the workpiece position and posture recognizing device 3 and the information communication module 4 may be prepared in a physically separated state by employing different hardware bodies.

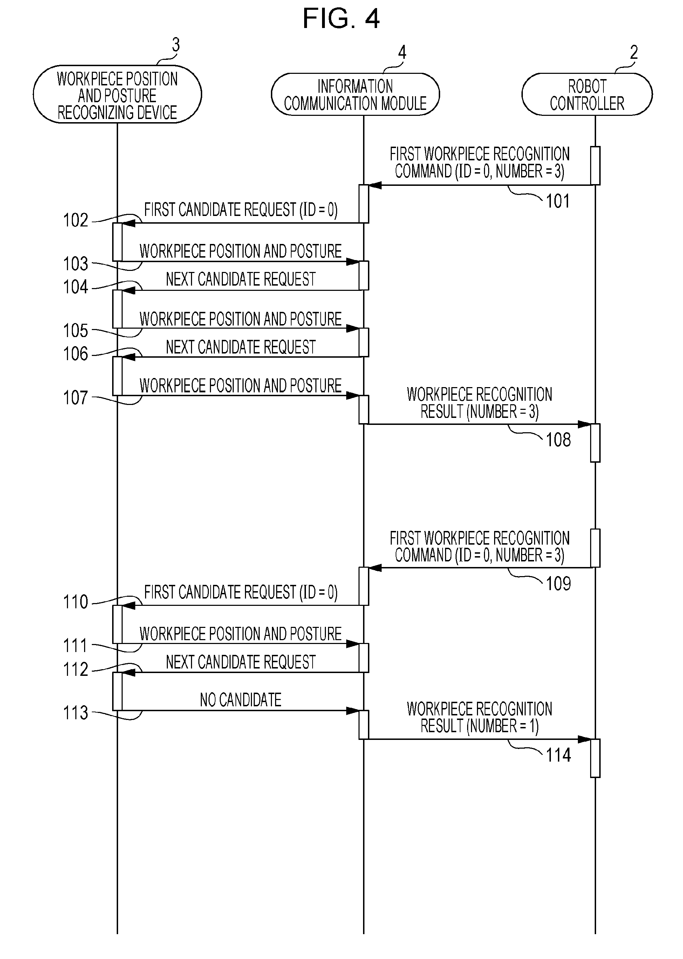

Figs. 4 to 6 are work flowcharts of the robot control system 100. The operation of the robot control system 100 will be described below in connection with practical examples by referring to the work flowcharts of Figs. 4 to 6 in addition to Fig. 3. In Figs. 4 to 6, a vertical axis represents the lapse of time, a hollow box represents processing executed by each device or module, and an arrow represents information communication.

Fig. 4 illustrates the operation when the robot controller 2 sends the workpiece recognition command in the state where the workpiece information containing the workpiece identification information "0" is read in the workpiece information storing section 31.

First, the workpiece recognition command sending section 21 of the robot controller 2 sends a first workpiece recognition command 101. In this embodiment, the workpiece recognition command contains two types of commands, i.e., a first workpiece recognition command and a second workpiece recognition command, which are handled by the information communication module 4 in different ways. For example, the first workpiece recognition command 101 requests the workpiece position and posture for the workpiece 6 having the workpiece identification information "0", and the number of the workpieces 6 to be recognized is "3". That point is denoted by "ID = 0, Number = 3" in Fig. 4. Hereinafter, "ID" in the drawing denotes the workpiece identification information, and "Number" denotes the number of the workpieces 6.

In accordance with the received first workpiece recognition command 101, the information communication module 4 sends the workpiece position and posture request to the workpiece position and posture recognizing device 3. Here, because the workpiece identification information "0" is already stored in the workpiece identification information storing section 42, the workpiece position and posture request sending section 40 first sends a first candidate request 102 for the workpiece identification information "0". In this embodiment, the workpiece position and posture request contains two types of requests, i.e., a first candidate request and a second candidate request, which are handled by the workpiece position and posture recognizing device 3 in different ways. The first candidate request is to request that the image processing is executed by the image processing section 30 and one of already obtained plural data of the workpiece positions and postures is sent, the one having the highest priority order. On the other hand, the next candidate request is to request sending of one of the already obtained plural data of the workpiece positions and postures, the one having the highest priority order except for the data having been already sent. Hence the workpiece position and posture recognizing device 3 having received the next candidate request does not execute the image processing in some cases.

The workpiece position and posture recognizing device 3 having received the first candidate request 102 detects the workpiece position and posture in the image processing section 30 by employing the workpiece information related to the workpiece identification information "0", which is stored in the workpiece information storing section 31, and sends a workpiece position and posture 103 having the highest priority order to the information communication module 4.

The information communication module 4 further sends a next candidate request 104 to the workpiece position and posture recognizing device 3 from the workpiece position and posture request sending section 40. In accordance with the image processing results having been already obtained, the workpiece position and posture recognizing device 3 sends a workpiece position and posture 105, which is a next candidate, to the information communication module 4 from the image processing section 30. The workpiece position and posture request sending section 40 repeats the sending of the next candidate request until the number of the obtained data of the workpiece positions and postures becomes equal to the number requested by the first workpiece recognition command 101, or until the candidate of the detected workpiece position and posture is not present any more. Here, another next candidate request 106 is sent, and a workpiece position and posture 107 is sent from the image processing section 30.

When the data of the workpiece positions and postures are obtained in the requested number, or when the candidate of the detected workpiece position and posture is not present any more, the information communication module 4 sends a workpiece recognition result 108 to the robot controller 2 from the workpiece recognition result sending section 41. The workpiece recognition result 108 contains the obtained workpiece positions and postures 103, 104 and 107, and it is assigned with the number of the obtained data of the workpiece positions and postures, i.e., "3".

The robot controller 2 receives the workpiece recognition result 108 by the workpiece recognition result receiving section 22, and controls the robot 1 by the robot control section 20 in accordance with the workpiece recognition result 108.

The following description is made about the case where the candidate of the workpiece position and posture having been detected by the workpiece position and posture recognizing device 3 is not present any more. It is likewise assumed, as illustrated in Fig. 4, that for the workpiece 6 having the workpiece identification information "0", a first workpiece recognition command 109 is sent from the workpiece recognition command sending section 21 of the robot controller 2 while the number "3" is designated.

As in the above-described example, the information communication module 4 sends a first candidate request 110 for the workpiece identification information "0" from the workpiece position and posture request sending section 40, and the workpiece position and posture recognizing device 3 sends a workpiece position and posture 111 to the information communication module 4 from the image processing section 30.

Subsequently, the workpiece position and posture request sending section 40 sends a next candidate request 112 to the workpiece position and posture recognizing device 3. However, it is here assumed that there is no candidate of the workpiece position and posture having been detected by the image processing section 30. Hence the image processing section 30 sends, to the information communication module 4, information 113 indicating that there is "no candidate".

Upon receiving the information 113 indicating that there is "no candidate", the workpiece recognition result sending section 41 of the information communication module 4 sends a workpiece recognition result 114 to the robot controller 2 in accordance with the obtained data of the workpiece position and posture without sending the workpiece position and posture request any more from the workpiece position and posture request sending section 40. The workpiece recognition result 114 contains the obtained workpiece position and posture 111 and the number "1" of the recognized workpiece.

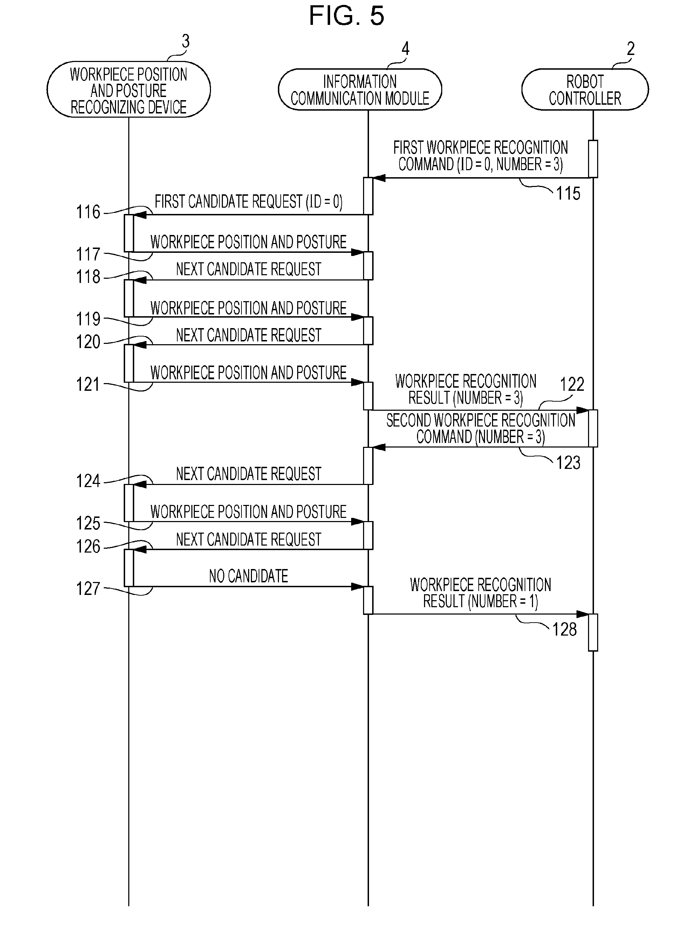

The first workpiece recognition command is handled in the information communication module 4 as described above. Handling of the second workpiece recognition command in the information communication module 4 will be described below with reference to Fig. 5.

First, it is assumed that a first recognition command 115 regarding the workpiece identification information "0" and the number "3" is sent from the robot controller 2, that one first candidate request 116 and two next candidate requests 118 and 120 are sent from the information communication module 4, and that workpiece positions and postures 117, 119 and 121 are sent from the workpiece position and posture recognizing device 3 in response to those candidate requests. As a result, a workpiece recognition result 122 is sent from the information communication module 4 to the robot controller 2. Until this point, the operation is the same as that described above with reference to Fig. 4.

When the robot controller 2 further requests a candidate of the workpiece position and posture for any reason, for example, the reason that grasping of the workpieces 6 in accordance with the three obtained data of the workpiece positions and postures is not performed, the workpiece recognition command sending section 21 sends a second workpiece recognition command 123 to the information communication module 4. The second workpiece recognition command 123 contains the information regarding the number of the workpieces 6 to be recognized, i.e., "3" here. The workpiece identification information is not necessarily to be contained in the second workpiece recognition command. Accordingly, the workpiece identification information is not contained in the second workpiece recognition command here.

In accordance with the second workpiece recognition command 123, the workpiece position and posture request sending section 40 of the information communication module 4 sends a next candidate request 124 to the workpiece position and posture recognizing device 3. The sending of the next candidate request 124 is repeated until data of the workpiece positions and postures is obtained in number equal to the number requested by the second workpiece recognition command 123, or until the candidate of the detected workpiece position and posture is not present any more. In the illustrated example, a workpiece position and posture 125 is sent from the image processing section 30 of the workpiece position and posture recognizing device 3, and information 127 indicating that there is "no candidate" is sent in response to a next candidate request 126 having been sent from the workpiece position and posture request sending section 40. Upon receiving that result, the workpiece recognition result sending section 41 of the information communication module 4 sends a workpiece recognition result 128, which contains the workpiece position and posture 125 and the number "1" of the recognized workpiece, to the robot controller 2.

As seen from the above description, the first workpiece recognition command is to instruct the workpiece position and posture recognizing device 3 to execute image processing, and to request the workpiece position and posture obtained with the image processing. When the number of the workpieces 6 to be recognized in accordance with the first workpiece recognition command is one, the information communication module 4 sends one first candidate request, and when the number of the workpieces 6 to be recognized in accordance with the first workpiece recognition command is plural, the information communication module 4 sends one first candidate request and one or more next candidate requests.

On the other hand, the second workpiece recognition command is to request another candidate of the workpiece position and posture based on the already-obtained results without newly requesting the workpiece position and posture recognizing device 3 to execute the image processing. The information communication module 4 sends one or more next candidate requests in accordance with the second workpiece recognition command. Therefore, when it is not necessary to recognize the workpiece position and posture again through the image processing, the robot controller 2 can quickly obtain the workpiece position and posture by employing the second workpiece recognition command, and can increase the speed of robot control.

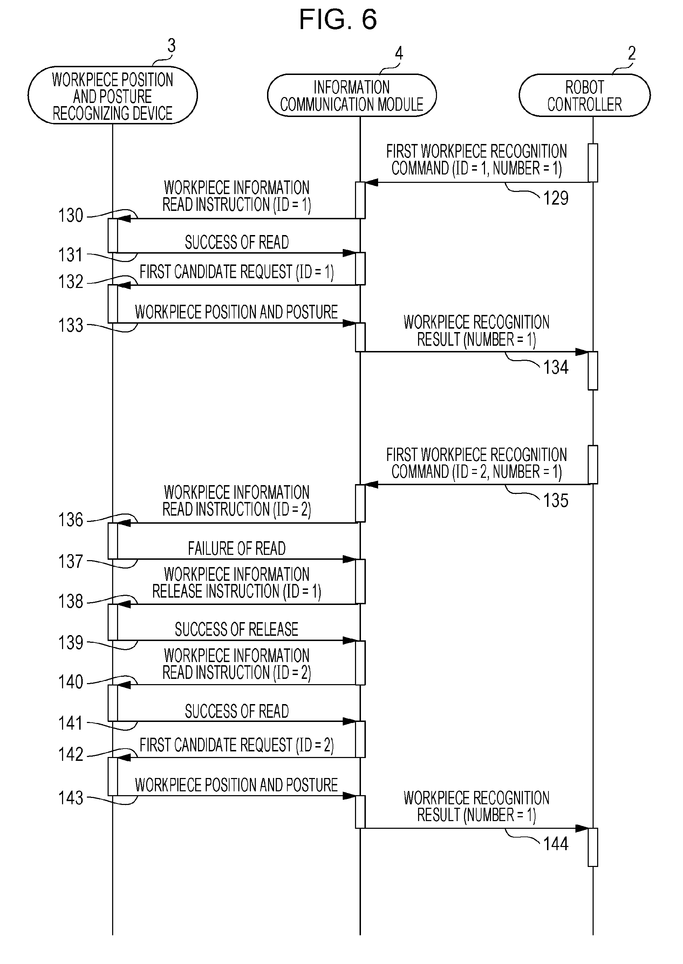

The operation executed when a workpiece recognition command is sent with respect to the workpiece 6 for which the workpiece information is not read in the workpiece information storing section 31 will be described below with reference to Fig. 6.

First, it is here assumed that a first workpiece recognition command 129 regarding the workpiece identification information "1" and the number "1" is sent from the workpiece recognition command sending section 21 of the robot controller 2. In this case, the workpiece position and posture request sending section 40 of the information communication module 4 refers to the workpiece identification information storing section 42, but the workpiece identification information "1" is not stored in the workpiece identification information storing section 42. Therefore, the workpiece identification information storing section 42 is operated to store the workpiece identification information "1", and the workpiece information read instructing section 43 is operated to instruct read of the workpiece information regarding the workpiece identification information "1".

The workpiece information read instructing section 43 sends a workpiece information read instruction 130 regarding the workpiece identification information "1" to the workpiece position and posture recognizing device 3. In accordance with the workpiece information read instruction 130, the workpiece position and posture recognizing device 3 operates such that the workpiece information reading section 33 reads the relevant workpiece information from the workpiece information accumulating section 32 and writes the relevant workpiece information into the workpiece information storing section 31. The read of the workpiece information is thus completed. Accordingly, the workpiece information reading section 33 sends information 131 indicating "success of the read" to the information communication module 4.

After receiving the information 131 indicating "success of the read", the workpiece position and posture request sending section 40 of the information communication module 4 sends a first candidate request 132 regarding the workpiece identification information "1" to the workpiece position and posture recognizing device 3. After receiving a workpiece position and posture 133 from the workpiece position and posture recognizing device 3, the workpiece recognition result sending section 41 sends a workpiece recognition result 134, which contains the workpiece position and posture 133 and the number "1" of the recognized workpiece, to the robot controller 2.

The above-described operation relates to the case where the read of the workpiece information by the workpiece information reading section 33 of the workpiece position and posture recognizing device 3 has succeeded. The operation executed when the read of the workpiece information by the workpiece information reading section 33 has failed will be described below.

It is further assumed that a first workpiece recognition command 135 regarding the workpiece identification information "2" and the number "1" is sent from the workpiece recognition command sending section 21 of the robot controller 2. In this case, as in the above-described case, the workpiece position and posture request sending section 40 of the information communication module 4 refers to the workpiece identification information storing section 42, but the workpiece identification information "2" is not stored in the workpiece identification information storing section 42. Therefore, the workpiece identification information storing section 42 is operated to store the workpiece identification information "2", and the workpiece information read instructing section 43 is operated to instruct read of the workpiece information regarding the workpiece identification information "2".

The workpiece information read instructing section 43 sends a workpiece information read instruction 136 regarding the workpiece identification information "2" to the workpiece position and posture recognizing device 3. In accordance with the workpiece information read instruction 136, the workpiece position and posture recognizing device 3 operates such that the workpiece information reading section 33 tries to read the relevant workpiece information from the workpiece information accumulating section 32 and to write the relevant workpiece information into the workpiece information storing section 31. In this case, however, because the workpiece information storing section 31 does not have a sufficient vacant capacity, the workpiece information is not written into the workpiece information storing section 31. Accordingly, the workpiece information reading section 33 sends information 137 indicating "failure of the read" to the information communication module 4.

Upon receiving the information 137 indicating "failure of the read", the workpiece information read instructing section 43 causes the workpiece information release instructing section 44 to instruct release of any part of the workpiece information. The workpiece information release instructing section 44 refers to the priority order storing section / frequency counting section 45 and selects part of the workpiece information currently stored, the part having the lowest priority order or the lowest frequency in use. On an assumption that part of the workpiece information related to the workpiece identification information "1" is selected, the workpiece information release instructing section 44 sends a workpiece information release instruction 138 regarding the workpiece identification information "1" to the workpiece position and posture recognizing device 3.

In accordance with the workpiece information release instructing 138, the workpiece information releasing section 34 of the workpiece position and posture recognizing device 3 releases the workpiece information corresponding to the workpiece identification information "1" from the workpiece information storing section 31. When the release of the workpiece information has succeeded, the workpiece information releasing section 34 sends information 139 indicating "success of the release" to the information communication module 4.

Upon receiving the information 139 indicating "success of the release", the workpiece information read instructing section 43 of the information communication module 4 sends a workpiece information read instruction 140 regarding the workpiece identification information "2" to the workpiece position and posture recognizing device 3 again. On an assumption that the read of the workpiece information has succeeded consequently, as in the above-described example, the information communication module 4 receives information 141 indicating "success of the read", and the workpiece position and posture request sending section 40 sends a first candidate request 142 regarding the workpiece identification information "2" to the workpiece position and posture recognizing device 3. After receiving a workpiece position and posture 143 from the workpiece position and posture recognizing device 3, the workpiece recognition result sending section 41 sends a workpiece recognition result 144, which contains the workpiece position and posture 143 and the number "1" of the recognized workpiece, to the robot controller 2.

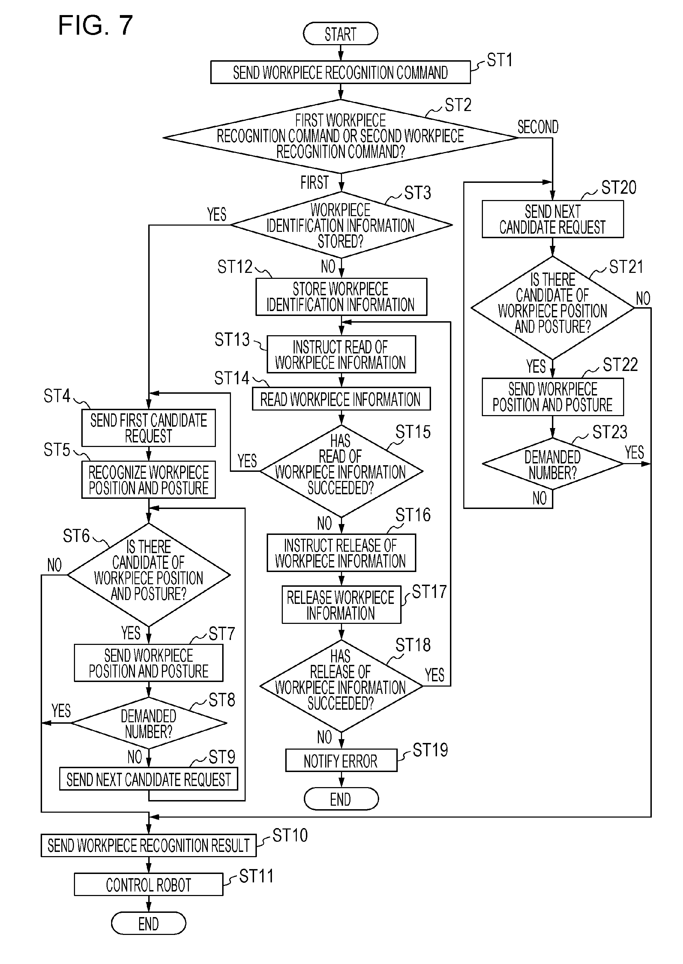

Fig. 7 is a flowchart of a robot control method executed by the robot control system 100 according to the embodiment, which has been described above in connection with the practical examples.

In the illustrated flow, first, a workpiece recognition command is sent from the workpiece recognition command sending section 21 of the robot controller 2 in step ST1. The workpiece recognition command is received by the information communication module 4, and whether the received workpiece recognition command is the first workpiece recognition command or the second workpiece recognition command is determined in step ST2.

When the received workpiece recognition command is the first workpiece recognition command, determination is made in step ST3 as to whether the workpiece identification information contained in the first workpiece recognition command is stored in the workpiece identification information storing section 42. If the workpiece identification information is stored, the flow advances to step ST4 where a first candidate request is sent from the workpiece position and posture request sending section 40 of the information communication module 4. In next step ST5, the image processing section 30 of the workpiece position and posture recognizing device 3 executes image processing in accordance with the first candidate request to recognize the workpiece position and posture.

In step ST6, determination is made as to whether there is a candidate of the detected workpiece position and posture except for the candidates having been already sent. If there is such a candidate, the flow advances to step ST7 where the relevant workpiece position and posture is sent from the image processing section 30. In step ST8, determination is made as to whether the number of the data of the workpiece positions and postures received by the information communication module 4 reaches the number demanded by the workpiece recognition command. If the number of the received data of the workpiece positions and postures does not reach the demanded number, the flow advances to step ST9 where the next candidate request is sent from the workpiece position and posture request sending section 40. Thereafter, the flow returns to step ST6 to repeat sending of the next candidate request until the candidate of the detected workpiece position and posture is not present any more, or until the number of received candidates of the workpiece positions and postures reaches the demanded number.

If it is determined in step ST6 that there is no candidate of the detected workpiece position and posture except for the candidates having been already sent, or it is determined in step ST8 that the number of received candidates of the workpiece positions and postures reaches the demanded number, the flow advances to step ST10 where the workpiece recognition result is sent from the workpiece recognition result sending section 41 of the information communication module 4. The robot controller 2 receives the workpiece recognition result by the workpiece recognition result receiving section 22, and controls the robot 1 in accordance with the received workpiece recognition result in step ST11.

On the other hand, if it is determined in step ST3 that the workpiece identification information contained in the first workpiece recognition command is not stored in the workpiece identification information storing section 42, the flow advances to step ST12 where the relevant workpiece identification information is stored in the workpiece identification information storing section 42. In next step ST13, the workpiece information read instruction is sent from the workpiece information read instructing section 43. Then, in step ST14, the workpiece information is read by the workpiece information reading section 33 of the workpiece position and posture recognizing device 3.

In next step ST15, determination is made as to whether the read of the workpiece information has succeeded. If the read of the workpiece information has succeeded, the flow advances to step ST4 to execute control in the same manner as per described above. On the other hand, if the read of the workpiece information has failed, the flow advances to step ST16 where the workpiece information release instruction is sent from the workpiece information release instructing section 44 of the information communication module 4. At this time, as described above, the workpiece information to be released is selected depending on the preset priority order or the frequency of the workpiece recognition command per workpiece by referring to the priority order storing section / frequency counting section 45. Upon receiving the sent workpiece information release instruction, the workpiece information releasing section 34 of the workpiece position and posture recognizing device 3 releases the workpiece information in step ST17.

In next step ST18, determination is made as to whether the release of the workpiece information has succeeded. If the release of the workpiece information has succeeded, the flow returns to step ST13 where the workpiece information read instruction is sent again. In such a way, the release of the workpiece information and the re-instruction for the read of the workpiece information are repeatedly executed until the read of the workpiece information succeeds. If the release of the workpiece information has failed in step ST18, this implies the occurrence of a state where the release of the workpiece information is now allowed, or the read of the necessary workpiece information is not allowed for any reason. Accordingly, an error is notified in step ST19, and the control is ended.

If it is determined in step ST2 that the workpiece recognition command is the second workpiece recognition command, the flow advances to step ST20 where the next candidate request is sent from the workpiece position and posture request sending section 40 of the information communication module 4. In next step ST21, as in step ST6, determination is made as to whether there is a candidate of the detected workpiece position and posture except for the candidates having been already sent. If there is such a candidate, the flow advances to step ST22 where the relevant workpiece position and posture is sent from the image processing section 30 as in step ST7. In step ST23, as in step ST8, determination is made as to whether the number of data of the workpiece positions and postures received by the information communication module 4 reaches the number demanded by the workpiece recognition command. If the number of the received data of the workpiece positions and postures does not reach the demanded number, the flow returns to step ST20 to repeat sending of the next candidate request, as in the above-described case, until the candidate of the detected workpiece position and posture is not present any more, or until the number of received candidates of the workpiece positions and postures reaches the demanded number.

If it is determined in step ST21 that there is no candidate of the detected workpiece position and posture except for the candidates having been already sent, or that the number of candidates of the workpiece positions and postures received in step ST23 reaches the demanded number, the flow advances to step ST10 where the workpiece recognition result is sent from the workpiece recognition result sending section 41 of the information communication module 4. Thereafter, the robot controller 2 receives the workpiece recognition result by the workpiece recognition result receiving section 22, and the robot control section 20 controls the robot 1.

While the embodiment of the present disclosure has been described above, the specific configurations in the embodiment are explained just illustratively and are not intended to limit the technical scope of the present disclosure. Those skilled in the art may appropriately modify the disclosed embodiment, and the technical scope of the invention disclosed in this Description is to be construed as involving those modifications.

## Claims

1. A robot control system (100) comprising:
a robot controller (2) connected to a robot (1);
a workpiece position and posture recognizing device (3) that recognizes a position and a posture of a workpiece (6); and
an information communication module (4) that communicates with the robot controller and the workpiece position and posture recognizing device,
the information communication module including:
a workpiece position and posture request sending section (40) that sends a workpiece position and posture request regarding a single workpiece to the workpiece position and posture recognizing device in accordance with a workpiece recognition command from the robot controller, which command contains information regarding a number of workpieces to be recognized; and
a workpiece recognition result sending section (41) that sends a workpiece recognition result, which contains information regarding a number of workpieces having been recognized, to the robot controller in accordance with one or more data of workpiece positions and postures from the workpiece position and posture recognizing device.

2. The robot control system according to Claim 1, wherein the workpiece recognition command contains a first workpiece recognition command and a second workpiece recognition command,
the workpiece position and posture request contains a first candidate request that requests the workpiece position and posture as a first candidate, and a next candidate request that requests the workpiece position and posture as a next candidate, and
the workpiece position and posture request sending section sends the one first candidate request or both the one first candidate request and the one or more next candidate requests in accordance with the first workpiece recognition command, and sends the one or more next candidate requests in accordance with the second workpiece recognition command.

3. The robot control system according to Claim 1 or 2, wherein the workpiece recognition command contains workpiece identification information, and
the information communication module further includes:
a workpiece identification information storing section (42) that stores the workpiece identification information corresponding to workpiece information, which has been read into the workpiece position and posture recognizing device, and
a workpiece information read instructing section (43) that, when the workpiece identification information contained in the workpiece recognition command is not stored in the workpiece identification information storing section, instructs the workpiece position and posture recognizing device to read the workpiece information corresponding to the relevant workpiece identification information.

4. The robot control system according to Claim 3, wherein the information communication module further includes a workpiece information release instructing section (44) that, when the read of the workpiece information by the workpiece position and posture recognizing device has failed, instructs release of at least part of the workpiece information having been read into the workpiece position and posture recognizing device.

5. The robot control system according to Claim 4, wherein the workpiece information release instructing section instructs the release of the workpiece information in accordance with a preset priority order or a frequency of the workpiece recognition command per workpiece.

6. The information communication module (4) used in the robot control system (100) according to any one of Claims 1 to 5.

7. A computer program causing a computer to function as the information communication module (4) according to Claim 6.

8. The robot controller (2) used in the robot control system (100) according to any one of Claims 1 to 5.

9. A robot control method comprising:
sending a workpiece position and posture request regarding a single workpiece in accordance with a workpiece recognition command that contains information regarding a number of workpieces to be recognized;
recognizing the workpiece position and posture in accordance with the workpiece position and posture request;
sending a workpiece recognition result, which contains information regarding a number of workpieces having been recognized, in accordance with one or more data of the workpiece positions and postures; and
controlling a robot in accordance with the workpiece recognition result.

10. The robot control method according to Claim 9, wherein the workpiece recognition command contains a first workpiece recognition command and a second workpiece recognition command,
the workpiece position and posture request contains a first candidate request that requests the workpiece position and posture as a first candidate, and a next candidate request that requests the workpiece position and posture as a next candidate, and
the method further comprises:
sending the one first candidate request or both the one first candidate request and the one or more next candidate requests in accordance with the first workpiece recognition command, and
sending the one or more next candidate requests in accordance with the second workpiece recognition command.

11. The robot control method according to Claim 9 or 10, wherein the workpiece recognition command contains workpiece identification information, and
the method further comprises:
reading workpiece information corresponding to the workpiece identification information that is contained in the workpiece recognition command;
storing the workpiece identification information corresponding to the workpiece information that has been read; and
when the workpiece identification information contained in the workpiece recognition command is not stored, instructing read of the workpiece information corresponding to the relevant workpiece identification information.

12. The robot control method according to Claim 11, wherein the method includes instructing release of at least part of the workpiece information having been read, when the read of the workpiece information has failed.

13. The robot control method according to Claim 12, wherein the method includes instructing the release of the workpiece information in accordance with a preset priority order or a frequency of the workpiece recognition command per workpiece.
